(19) Europäisches Patentamt
European Patent Office
Office européen des brevets

(11) **EP 4 429 130 A1**

(12) **EUROPEAN PATENT APPLICATION**
published in accordance with Art. 153(4) EPC

(43) Date of publication:
**11.09.2024  Bulletin 2024/37**

(21) Application number: **22919960.9**

(22) Date of filing: **05.12.2022**

(51) International Patent Classification (IPC):
**H04B 10/2581** (2013.01)    **H04B 10/60** (2013.01)
**H04B 10/11** (2013.01)    **G02B 6/42** (2006.01)

(52) Cooperative Patent Classification (CPC):
**G02B 6/02; G02B 6/42; G02B 6/43; H04B 10/11;**
**H04B 10/2581; H04B 10/60**

(86) International application number:
**PCT/CN2022/136463**

(87) International publication number:
**WO 2023/134327 (20.07.2023 Gazette 2023/29)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.01.2022  CN 202210033151**

(71) Applicant: **Huawei Technologies Co., Ltd.**
**Shenzhen, Guangdong 518129 (CN)**

(72) Inventors:
• **ZHANG, Lin**
**Tianjin 300072 (CN)**

• **WU, Yuping**
**Shenzhen, Guangdong 518129 (CN)**
• **ZHENG, Bofang**
**Shenzhen, Guangdong 518129 (CN)**
• **WANG, Yang**
**Tianjin 300072 (CN)**
• **YANG, Zhiqun**
**Tianjin 300072 (CN)**

(74) Representative: **Gill Jennings & Every LLP**
**The Broadgate Tower**
**20 Primrose Street**
**London EC2A 2ES (GB)**

(54) **LIGHT RECEIVING MODULE, DEVICE AND METHOD**

(57)    A light receiving module (200) is provided, including a beam contraction module (201), a multi-core multi-mode waveguide (202), and a detector (203). The beam contraction module (201) is configured to receive a first optical signal, and contract a mode spot of the first optical signal, to obtain a second optical signal. The multi-core multi-mode waveguide (202) includes a cladding layer (2022) and N waveguides (2021). The multi-core multi-mode waveguide (202) is configured to: receive the second optical signal, and concentrate energy of the second optical signal in a plurality of waveguides (2021) of the N waveguides (2021), to obtain a plurality of third optical signals. The detector is an array formed by N sub-detectors. A plurality of sub-detectors of the N sub-detectors are in one-to-one correspondence with the plurality of third optical signals. The plurality of sub-detectors are configured to receive the plurality of third optical signals, to obtain a plurality of electrical signals based on the plurality of third optical signals. An area and an angle for receiving the second optical signal can be increased by using the multi-core multi-mode waveguide (202), to reduce impact of offsets of a center position and a pointing angle of a light spot on light receiving and detecting efficiency, and reduce a power jitter.

FIG. 2

## Description

This application claims priority to Chinese Patent Application No. CN202210033151.1, filed with the China National Intellectual Property Administration on January 12, 2022 and entitled "LIGHT RECEIVING MODULE, DEVICE, AND METHOD", which is incorporated herein by reference in its entirety.

## TECHNICAL FIELD

This application relates to the field of optical communication, and in particular, to a light receiving module, device, and method.

## BACKGROUND

Free space optical communication (free space optical communication, FSOC) has been widely studied for advantages such as high security, strong anti-interference capability, and high bandwidth, and is an important part of the future wide area free space network.

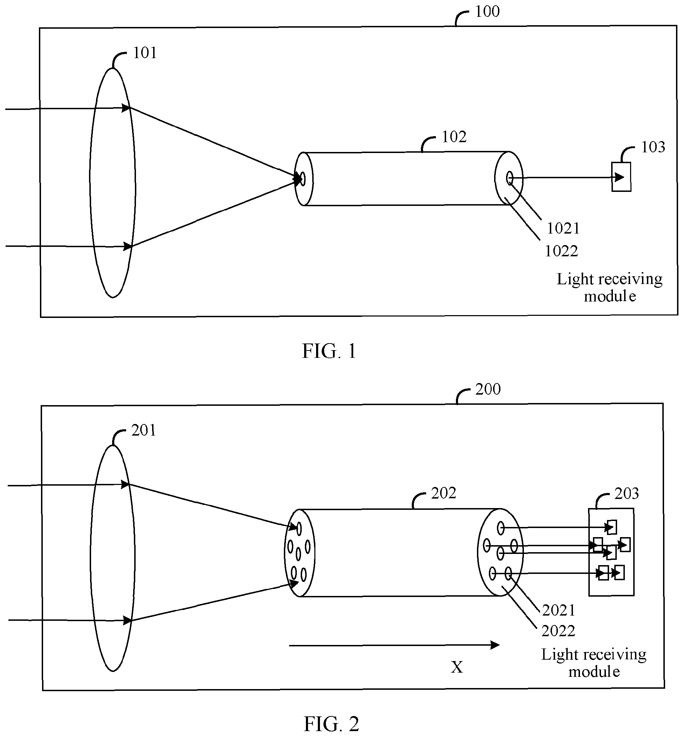

Currently, a common technical method is to contract a space signal by using an optical beam contraction apparatus, couple the space signal into a single-mode or multi-mode optical fiber, and then enter a photoelectric detector to convert an optical signal into an electrical signal. As shown in FIG. 1, a light receiving module 100 includes a beam contraction module 101, a single-core single-mode or single-core multi-mode optical fiber 102, and a detector 103. The beam contraction module 101 is configured to: receive a first optical signal, and contract a mode spot of the first optical signal, to obtain a second optical signal. The single-core single-mode or single-core multi-mode optical fiber 102 includes a fiber core 1021 and a cladding layer 1022. The single-core single-mode or single-core multi-mode optical fiber 102 is configured to receive the second optical signal. The second optical signal irradiates on an end surface of the single-core single-mode or single-core multi-mode optical fiber 102 and enters the fiber core 1021. The single-core single-mode or single-core multi-mode optical fiber 102 is configured to output a third optical signal. The detector 103 is configured to convert the third optical signal into an electrical signal.

However, for the free space optical communication in the atmosphere, due to impact of turbulence in an atmospheric channel, a center position and a pointing angle of a light spot of the second optical signal offset to different degrees with time, and the light spot expands, reducing light receiving and detecting efficiency of the light receiving module, and causing a power jitter.

## SUMMARY

This application provides a light receiving module. An area for receiving a second optical signal can be increased by using a multi-core multi-mode waveguide, to reduce impact of offsets of a center position and a pointing angle of a light spot on light receiving and detecting efficiency, and to reduce a power jitter.

According to a first aspect of this application, a light receiving module is provided. The light receiving module includes a beam contraction module, a multi-core multi-mode waveguide, and a detector. The beam contraction module is configured to: receive a first optical signal, and contract a mode spot of the first optical signal, to obtain a second optical signal. The multi-core multi-mode waveguide includes a cladding layer and N waveguides. N is an integer greater than 1. The multi-core multi-mode waveguide is configured to: receive the second optical signal, and concentrate energy of the second optical signal in a plurality of waveguides of the N waveguides, to obtain a plurality of third optical signals. The detector is an array formed by N sub-detectors. The N sub-detectors are in one-to-one correspondence with the N waveguides. A plurality of sub-detectors of the N sub-detectors are in one-to-one correspondence with the plurality of third optical signals. The plurality of sub-detectors are configured to receive the plurality of third optical signals, to obtain a plurality of electrical signals based on the plurality of third optical signals.

In an optional manner of the first aspect, the multi-core multi-mode waveguide is a multi-core multi-mode optical fiber. The multi-core multi-mode optical fiber meets a multi-mode condition. The multi-mode condition is as follows:

$$\frac{2\pi a}{\lambda}\sqrt{n_{core}^2 - n_{clad}^2} > 2.405$$

. a is a radius of a fiber core of the multi-core multi-mode optical fiber. $\lambda$ is a wavelength of the second optical signal. $n_{core}$ is a refractive index of the fiber core. $n_{clad}$ is a refractive index of the cladding layer. By using the multi-core multi-mode optical fiber, energy of an optical signal that is irradiated on the cladding layer can be better coupled to the fiber core. Therefore, in this application, coupling efficiency can be improved.

In an optional manner of the first aspect, the multi-core multi-mode optical fiber further meets the following condition:

$$1.15 \leq \frac{n_{core}}{n_{clad}} \leq 1.5$$

.

In an optional manner of the first aspect, the N waveguides are of $Ge_{x1}Sb_{y1}Se_{z1}$ materials. $0 \leq x_1 \leq 30$. $0 \leq y_1 \leq 45$. $z_1 = 100 - x_1 - y_1$. The cladding layer is of a $Ge_{x2}Sb_{y2}S_{z2}$ material. $0 \leq x_2 \leq 30$. $0 < y_2 \leq 40$. $z_2 = 100 - x_2 - y_2$. Ge is a germanium element. Sb is an antimony element. S is a sulfur element. Se is a selenium element.

In an optional manner of the first aspect, the N waveguides are of $As_{x3}Se_{y3}$ materials. $35 \leq x_3 \leq 45$. $y_3 = 100 - x_3$. The cladding layer is a $Ge_{x4}As_{y4}Se_{z4}$ material. $0 \leq x_4 \leq 45$. $0 \leq y_4 \leq 45$. $z_4 = 100 - x_4 - y_4$. Ga is a gallium element. As is an arsenic element.

In an optional manner of the first aspect, a length of the multi-core multi-mode waveguide is between M×1520 micrometers and M×2005 micrometers, and M is an integer greater than 0.

In an optional manner of the first aspect, a cross section of the multi-core multi-mode waveguide is a circle. A diameter of the circle is between 100 micrometers and 300 micrometers.

In an optional manner of the first aspect, a distance between centers of any two waveguides of the N waveguides is greater than or equal to 15 micrometers.

In an optional manner of the first aspect, materials of the N waveguides and the cladding layer are silicon nitride materials.

In an optional manner of the first aspect, a ratio of a light spot area S1 of the second optical signal irradiating on the multi-core multi-mode waveguide to a cross-sectional area S2 of the multi-core multi-mode waveguide is less than 1.5. Due to impact of turbulence, a position of a light spot of the second optical signal may offset. Limiting the light spot area to less than 1.5 times the cross-sectional area of the multi-core multi-mode waveguide can reduce the impact of the turbulence and improve the coupling efficiency.

In an optional manner of the first aspect, the multi-core multi-mode waveguide is a multi-core multi-mode silicon nitride waveguide array.

According to a second aspect of this application, a light receiving device is provided. The light receiving device includes a signal processor and a light receiving module. The light receiving module is configured to receive a first optical signal, to obtain a plurality of electrical signals based on the first optical signal. The signal processor is configured to add the plurality of electrical signals, to obtain a target electrical signal.

According to a third aspect of this application, an optical communication system is provided. The optical communication system includes a light transmitting device and the light receiving device according to the second aspect. The light transmitting device is configured to transmit a first optical signal to the light receiving device. The light receiving device is configured to receive the first optical signal, to obtain a plurality of third optical signals based on the first optical signal. The light receiving device is further configured to convert the plurality of third optical signals into a plurality of electrical signals.

According to a fourth aspect of this application, a light receiving method is provided. The light receiving method includes the following steps: A light receiving device receives a first optical signal. The light receiving device contracts a mode spot of the first optical signal, to obtain a second optical signal. The light receiving device concentrates energy of the second optical signal in a plurality of regions, to obtain a plurality of third optical signals. The plurality of third optical signals are in one-to-one correspondence with the plurality of regions. The light receiving device converts the plurality of third optical signals into a plurality of electrical signals. By adding the plurality of electrical signals, a target electrical signal is obtained.

## BRIEF DESCRIPTION OF DRAWINGS

FIG. 1 is a diagram of a structure of a light receiving module;

FIG. 2 is a diagram of a structure of a light receiving module according to an embodiment of this application;

FIG. 3 is a diagram of a structure of a multi-core multi-mode waveguide according to an embodiment of this application;

FIG. 4 is a diagram of a structure of a light receiving device according to an embodiment of this application;

FIG. 5 is a diagram of a structure of an optical communication system according to an embodiment of this application;

FIG. 6 is a diagram of a cross-section of a multi-core multi-mode waveguide according to an embodiment of this application;

FIG. 7 is a first diagram of coupling efficiency of a multi-core multi-mode waveguide according to an embodiment of this application;

FIG. 8 is a second diagram of coupling efficiency of a multi-core multi-mode waveguide according to an embodiment of this application;

FIG. 9 is a third diagram of coupling efficiency of a multi-core multi-mode waveguide according to an embodiment of this application; and

FIG. 10 is a schematic flowchart of a light receiving method according to an embodiment of this application.

## DESCRIPTION OF EMBODIMENTS

This application provides a light receiving module, device, and method. An area for receiving a second optical signal can be increased by using a multi-core multi-mode waveguide, to reduce impact of offsets of a center position and a pointing angle of a light spot on light receiving and detecting efficiency, and reduce a power jitter. It should be understood that "first", "second", "target", and the like used in this application are merely for differentiation and description, but cannot be understood as an indication or implication of relative importance or an indication or implication of a sequence. In addition, for brevity and clarity, reference numbers and/or letters are repeated in a plurality of accompanying drawings of this application. Repetition is not indicative of a strictly limiting relationship between the various embodiments and/or configurations.

The light receiving module in this application is applied to the field of optical communication. In the field of optical communication, an FSOC technology may be used to implement air-to-air communication between a light transmitting device and a light receiving device. In an actual application, due to impact of turbulence, a center position of a light spot of an optical signal may offset, thereby reducing coupling efficiency.

Therefore, this application provides a light receiving module. FIG. 2 is a diagram of a structure of a light receiving module according to an embodiment of this application. As shown in FIG. 2, a light receiving module 200 includes a beam contraction module 201, a multi-core multi-mode waveguide 202, and a detector 203.

The beam contraction module 201 is also referred to as an optical receiving antenna. The beam contraction module 201 may be formed by a lens group or a reflector group. The beam contraction module 201 is configured to receive a first optical signal, and contract a mode spot of the first optical signal, to obtain a second optical signal. The second optical signal irradiates on an input end surface of the multi-core multi-mode waveguide 202. The multi-core multi-mode waveguide 202 includes a cladding layer 2022 and N waveguides 2021. N is an integer greater than 1. In FIG. 2, N is 6. Materials of the waveguide 2021 and the cladding layer 2022 may include a sulfur-based glass material, another glass material, or the like. For example, the sulfur-based glass material may be $Ge_xSb_yS_z$, $Ge_xSb_ySe_z$, $Ga_xSb_yS_z$, $Ga_xSb_ySe_z$, $Ge_xAs_yS_z$, or $Ge_xAs_ySe_z$. For another example, materials of the waveguide 2021 and the cladding layer 2022 may be $As_xSe_y$ or $As_xS_y$. Ge is a germanium element. Sb is an antimony element. S is a sulfur element. Se is a selenium element. Ga is a gallium element. As is an arsenic element. The waveguide 2021 and the cladding layer 2022 vary based on a ratio of elements. x, y, and z are all real numbers. The waveguide 2021 and the cladding layer 2022 may alternatively be made of silicon nitride materials. Refractive indexes of the waveguide 2021 and the cladding layer 2022 of the silicon nitride materials are determined based on a ratio of a nitrogen element to a silicon element.

The multi-core multi-mode waveguide 202 may be a multi-core multi-mode optical fiber. The multi-core multi-mode optical fiber meets the following condition:

$$\frac{2\pi a}{\lambda}\sqrt{n_{core}^2 - n_{clad}^2} > 2.405$$

. When the multi-core multi-mode waveguide 202 meets the foregoing multi-mode condition, each waveguide 2021 in the multi-core multi-mode waveguide 202 corresponds to one multi-mode optical fiber. a is a radius of the waveguide 2021. $\lambda$ is a wavelength of the second optical signal. $n_{core}$ is the refractive index of the waveguide 2021. $n_{clad}$ is the refractive index of the cladding layer 2022. The multi-core multi-mode waveguide 202 is configured to: receive the second optical signal, and concentrate energy of the second optical signal in a plurality of waveguides 2021 of the N waveguides 2021, to obtain a plurality of third optical signals. In FIG. 2, a quantity of third optical signals is 6. It should be understood that, in an actual application, the quantity of third optical signals may be any integer that is greater than 1 and less than or equal to N. The plurality of third optical signals are in one-to-one correspondence with the plurality of waveguides 2021. The detector 203 is an array formed by N sub-detectors. The N sub-detectors are in one-to-one correspondence with the N waveguides, and a plurality of sub-detectors of the N sub-detectors are in one-to-one correspondence with the plurality of third optical signals. The plurality of sub-detectors are configured to receive the plurality of third optical signals to obtain a plurality of electrical signals.

In this application, a plurality of detectors are used to receive the plurality of third optical signals, so that an area for receiving the second optical signal can be increased, to reduce impact of offsets of a center position and a pointing angle of a light spot on light receiving and detecting efficiency, and reduce a power jitter. To reduce impact of turbulence, in this embodiment of this application, a ratio of a light spot area S1 of the second optical signal irradiating on the multi-core multi-mode waveguide 202 to a cross-sectional area S2 of the multi-core multi-mode waveguide 202 may be limited to less than 1.5. The cross section of the multi-core multi-mode waveguide 202 is perpendicular to an X axis.

In this embodiment of this application, coupling efficiency of the multi-core multi-mode waveguide 202 is related to dimensions of the waveguide 2021 and the cladding layer 2022. When the cladding layer 2022 and the waveguide 2021 are cylindrical, a diameter of the cladding layer 2022 may be between 100 micrometers and 300 micrometers. A diameter of the waveguide 2021 may be between 0.05 micrometers and 99 micrometers. The diameter of the cladding layer 2022 includes 100 micrometers or 300 micrometers. The diameter of the waveguide 2021 includes 0.05 micrometers or 99 micrometers.

In this embodiment of this application, the coupling efficiency of the multi-core multi-mode waveguide 202 is related to the refractive indexes of the waveguide 2021 and the cladding layer 2022. The refractive indexes of the waveguide 2021 and the cladding layer 2022 may be between 2 and 3. A refractive index contrast ratio of the waveguide 2021 and the cladding layer 2022 may meet the following condition:

$$1.15 \leq \frac{n_{core}}{n_{clad}} \leq 1.5$$

.

For example, a material of the waveguide 2021 is $Ge_{x1}Sb_{y1}Se_{z1}$. $x_1$ is between 0 and 30. $y_1$ is between 0 and 45. $z_1 = 100 - x_1 - y_1$. The refractive index of the waveguide 2021 varies with an element ratio. In this case, the refractive index of the waveguide 2021 is between 2.4 and 2.7. A material of the cladding layer 2022 is $Ge_{x2}Sb_{y2}S_{z2}$. $x_2$ is between 0 and 30. $y_2$ is between 0 and 45. $z_2 = 100 - x_2 - y_2$. The refractive index of the cladding layer 2022 is between 2.1 and 2.2.

For another example, a material of the waveguide 2021 is $As_{x3}Se_{y3}$. $x_3$ is between 35 and 45. $y_3 = 100 - x_3$. The refractive index of the waveguide 2021 is between 2.8 and 2.9. A material of the cladding layer

2022 is $Ge_{x4}As_{y4}Se_{z4}$. $x_4$ is between 0 and 45. $y_4$ is between 0 and 45. $z_4=100-x_4-y_4$. The refractive index of the cladding layer 2022 is between 2.5 and 2.6.

In this embodiment of this application, the second optical signal may oscillate between the cladding layer and the waveguide of the multi-core multi-mode waveguide 202. Therefore, the coupling efficiency of the multi-core multi-mode waveguide 202 is related to a length of the multi-core multi-mode waveguide 202. A length direction of the multi-core multi-mode waveguide 202 is an X-axis direction in FIG. 2. To improve the coupling efficiency, the length of the multi-core multi-mode waveguide 202 may be between M×1520 micrometers and M×2005 micrometers. The length includes M×1520 micrometers and M×2005 micrometers. M is an integer greater than 0.

It should be understood that, the light receiving module in FIG. 2 is merely an example provided in this embodiment of this application. In an actual application, a person skilled in the art may adaptively modify the light receiving module based on a requirement. The adaptive modification may include one or more of the following content.

In FIG. 2, a shape of the waveguide 2021 is a circle. In an actual application, the shape of the waveguide 2021 may alternatively be an ellipse, a polygon, or the like. The polygon may be a hexagram, a hexagon, an octagon, or the like. Similarly, a shape of the multi-core multi-mode waveguide 202 may alternatively be a polygon.

In FIG. 2, the light receiving module 200 may further include a combiner. The combiner is configured to receive the plurality of electrical signals from a plurality of detectors 203. The combiner is configured to add the plurality of electrical signals to obtain a target electrical signal.

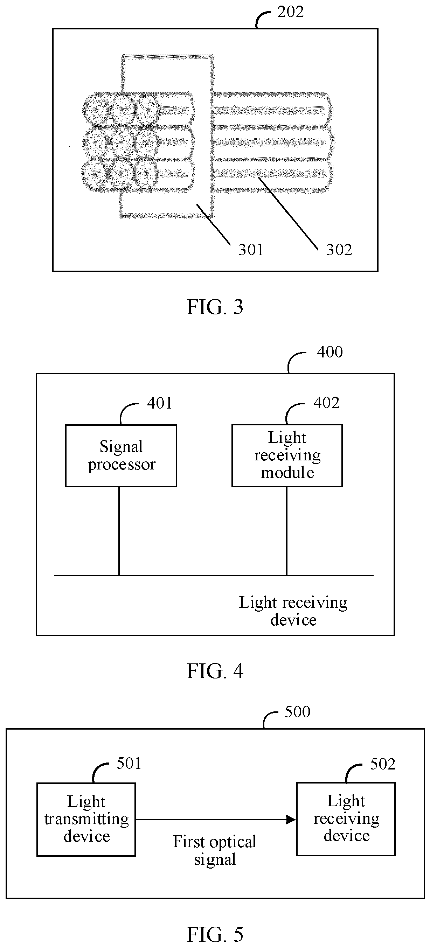

In FIG. 2, no gap exists in the multi-core multi-mode waveguide 202. In an actual application, a gap may exist in the multi-core multi-mode waveguide 202. For example, FIG. 3 is a diagram of a structure of a multi-core multi-mode waveguide according to an embodiment of this application. As shown in FIG. 3, the multi-core multi-mode waveguide 202 includes nine multi-mode optical fibers 302 and a fixture 301. The fixture 301 is configured to fix the nine multi-mode optical fibers 302. In comparison with the multi-core multi-mode waveguide in FIG. 2, the multi-core multi-mode waveguide in FIG. 3 has lower processing costs. Therefore, in this embodiment of this application, costs of the light receiving module 200 may be reduced. A multi-mode optical fiber 302 includes a fiber core and a cladding layer. In an example, a refractive index of the cladding layer is 2.2. A refractive index of the fiber core is 2.6. A diameter of the fiber core is 9 micrometers. A diameter of the cladding layer is 80 micrometers. A distance between centers of any two fiber cores is between 80 micrometers and 200 micrometers. The distance between the centers includes 80 micrometers and 200 micrometers.

The foregoing describes the light receiving module provided in this application, and the following describes a light receiving device provided in this application. FIG. 4 is a diagram of a structure of a light receiving device according to an embodiment of this application. As shown in FIG. 4, a light receiving device 400 includes a signal processor 401 and a light receiving module 402. The light receiving module 402 is configured to receive a first optical signal, to obtain a plurality of electrical signals based on the first optical signal. The signal processor 401 is configured to add the plurality of electrical signals to obtain a target electrical signal. For descriptions of the light receiving module 402, refer to the descriptions of the light receiving module in FIG. 2 or FIG. 3.

The following describes an optical communication system provided in this application. FIG. 5 is a diagram of a structure of an optical communication system according to an embodiment of this application. As shown in FIG. 5, an optical communication system 500 includes a light transmitting device 501 and a light receiving device 502. The light transmitting device 501 is configured to transmit a first optical signal to the light receiving device 502 in an isolated space. The light receiving device 502 is configured to receive the first optical signal, to obtain a plurality of third optical signals based on the first optical signal. The light receiving device 502 is further configured to convert the plurality of third optical signals into a plurality of electrical signals. For descriptions of the light receiving device 502, refer to the descriptions of the light receiving device in FIG. 4.

By using the optical communication system 500 provided in this application, coupling efficiency of the light receiving device 502 can be improved. The following uses a specific simulation example for description. In FIG. 5, before transmitting the first optical signal, the light transmitting device 501 needs to collimate the first optical signal. After collimation, a diameter of the first optical signal is 10 centimeters. A wavelength of the first optical signal is 1550 nanometers. The first optical signal passes through an atmospheric turbulence channel with a length of 4 kilometers. For a structure of the light receiving device 502, refer to FIG. 4 and FIG. 2. In FIG. 2, a central axis of the multi-core multi-mode waveguide 202 coincides with an axis of the beam contraction module 201. A focus of the beam contraction module 201 coincides with an input end surface of the multi-core multi-mode waveguide 202.

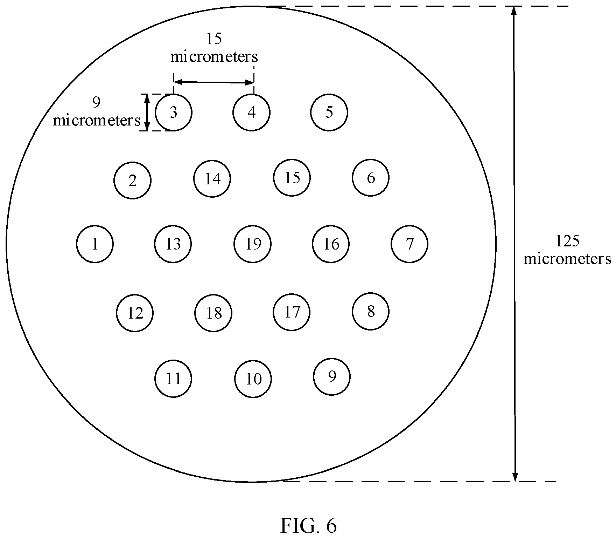

The beam contraction module 201 is configured to contract a mode spot of an incident first optical signal to a dimension D (diameter). The multi-core multi-mode waveguide 202 includes N optical fibers and a cladding layer. To reduce a dimension of a waveguide and increase a numerical aperture of a single-root multi-mode fiber or a waveguide, a refractive index $n_{core}$ of a fiber core is greater than a refractive index $n_{clad}$ of the cladding layer, where $n_{core}-n_{clad}>0.05$. The N fiber cores may be arranged according to a specific rule to form a multi-mode multi-core optical fiber. For example, a material for manufacturing the fiber core and the cladding layer is a sulfur-based glass material. Refractive indexes $n_{core}$ of the N fiber cores are all 2.6. The refractive index $n_{clad}$ of the cladding layer is 2.2. A diameter of the fiber core is greater than a distance between fiber cores. FIG. 6 is a diagram of a cross-section of a multi-core multi-mode waveguide according to an embodiment of this application. A layout and numbering of the fiber cores are shown in FIG. 6. A diameter of the multi-core multi-mode waveguide 202 is 125 micrometers. A diameter of the fiber core is 9 micrometers. A maximum distance between centers of fiber cores is 80 micrometers. A minimum distance between centers of fiber cores is 15 micrometers. A quantity of the fiber cores is 19. A diameter D1 of an input end surface of the multi-core multi-mode waveguide 202 is approximately equal to D. The plurality of detectors 203 include N photoelectric detectors. A diameter D2 of a photosensitive surface of a single detector is greater than the diameter of the fiber core of the multi-core multi-mode waveguide 202. A layout of the N photoelectric detectors is the same as a layout of the N fiber cores. Distances between every two detectors are the same, and distances between every two fiber cores are the same. The plurality of detectors 203 are arranged close to the multi-core multi-mode waveguide 202. The plurality of detectors 203 are aligned with the multi-core multi-mode waveguide 202. A center of each detector faces a center of a fiber core in front.

After the beam contraction module 201 contracts a first optical signal, an area of a light spot of the first optical signal irradiating on the input end surface of the multi-core multi-mode waveguide 202 is basically the same as a cross-sectional area of the multi-core multi-mode waveguide 202. Alternatively, an area of a light spot of the first optical signal irradiating on the input end surface of the multi-core multi-mode waveguide 202 is slightly smaller than a cross-sectional area of the multi-core multi-mode waveguide 202. It should be understood that, the cross-sectional area of the multi-core multi-mode waveguide 202 only includes cross-sectional areas of the fiber core and the cladding layer. The cross-sectional area of the multi-core multi-mode waveguide 202 does not include a cross-sectional area of a coating layer or a sheath layer. Theoretically, all optical signals that are irradiated on the input end surface of the multi-core multi-mode waveguide 202 enter the fiber core after being transmitted for a distance, and oscillate between the fiber core and the cladding layer. Therefore, the coupling efficiency of the multi-core multi-mode waveguide 202 is related to a length of the multi-core multi-mode waveguide 202. By intercepting a proper length of the multi-core multi-mode waveguide 202, most energy of the optical signal may be contracted to the fiber core at an output end surface of the multi-core multi-mode waveguide 202. The plurality of detectors 203 are at a rear end of the multi-core multi-mode waveguide 202. The plurality of optical signals that are output from the output end surface of the multi-core multi-mode waveguide 202 directly enter the photoelectric detector. To enable to-be-received optical signals to be received by the detector as many as possible, a dimension of a photosensitive surface of the photoelectric detector is equal to a dimension of the fiber core, or a dimension of a photosensitive surface of the photoelectric detector is slightly larger than a dimension of the fiber core.

In an actual application, after passing through atmosphere, the light spot may appear phenomena such as diffusion and crack. For example, under interference of weak turbulence, a shape of a light spot of a Gaussian beam does not change obviously, and a center position of the light spot does not offset obviously. Under interference of medium turbulence, the light spot begins to split, and the center position of the light spot offsets obviously. Under interference of strong turbulence, the light spot is broken seriously.

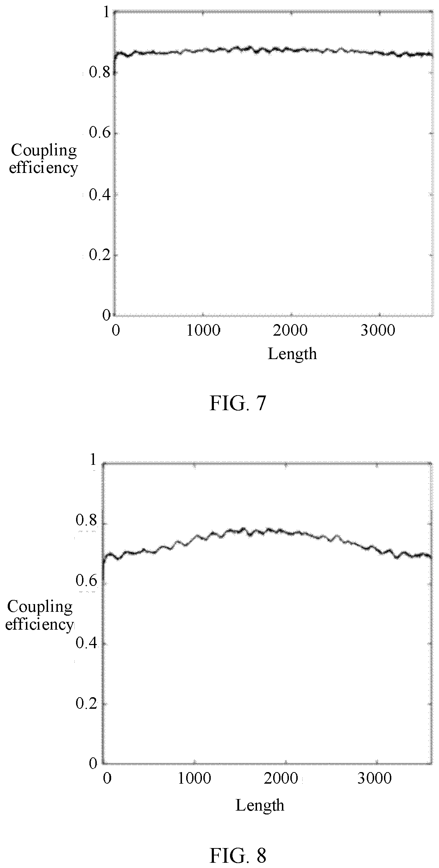

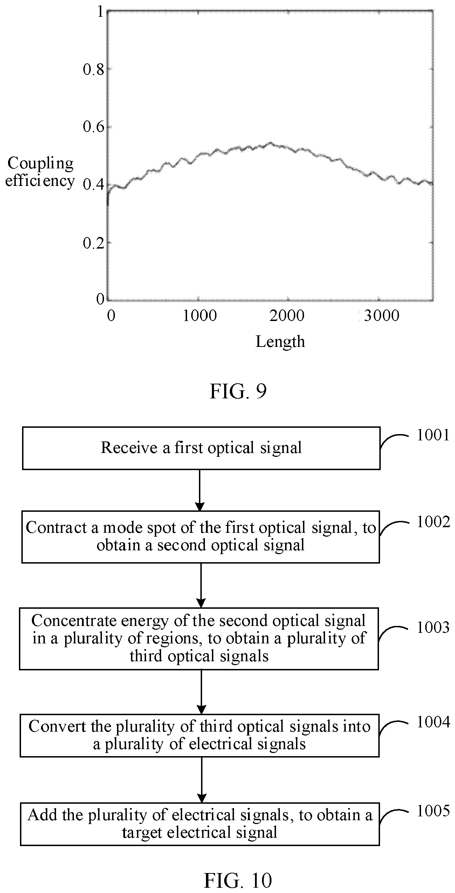

FIG. 7 is a first diagram of coupling efficiency of a multi-core multi-mode waveguide according to an embodiment of this application. In FIG. 7, a horizontal coordinate is a length of the multi-core multi-mode waveguide. The length is in a unit of micrometer. A vertical coordinate is the coupling efficiency of the multi-core multi-mode waveguide. As shown in FIG. 7, under a condition of weak turbulence, the coupling efficiency of the multi-core multi-mode waveguide is about 0.85. FIG. 8 is a second diagram of coupling efficiency of a multi-core multi-mode waveguide according to an embodiment of this application. As shown in FIG. 8, under a condition of medium turbulence, the coupling efficiency of the multi-core multi-mode waveguide varies with the length of the multi-core multi-mode waveguide. A range of the coupling efficiency is 0.7 to 0.77. In addition, when the coupling efficiency is high, the length of the multi-core multi-mode waveguide is between 1520 micrometers and 2005 micrometers. In this case, the coupling efficiency may be greater than 0.76. In an actual application, the coupling efficiency of the multi-core multi-mode waveguide changes periodically with the length of the multi-core multi-mode waveguide. A periodicity length is about 3600 micrometers. FIG. 9 is a third diagram of coupling efficiency of a multi-core multi-mode waveguide according to an embodiment of this application. As shown in FIG. 9, under a condition of strong turbulence, the coupling efficiency of the multi-core multi-mode waveguide varies with the length of the multi-core multi-mode waveguide. A range of the coupling efficiency is 0.36 to 0.53. When the length of the multi-core multi-mode waveguide is between micrometers and 2107 micrometers, the coupling efficiency is greater than 0.52. In an actual application, the coupling efficiency of the multi-core multi-mode waveguide changes periodically with the length of the multi-core multi-mode waveguide. Therefore, to improve the coupling efficiency, when the multi-core multi-mode waveguide is processed, the length of the multi-core multi-mode waveguide may be controlled to be between M×1520 micrometers and M×2005 micrometers.

The foregoing describes the optical communication system provided in this application, and the following describes a light receiving method provided in this application. FIG. 10 is a schematic flowchart of a light receiving method according to an embodiment of this application. As shown in FIG. 10, the light receiving method includes the following steps.

In step 1001, a light receiving device receives a first optical signal. For descriptions of the light receiving device, refer to the foregoing descriptions of the light receiving module, the light receiving device, or the optical communication system. The light receiving device may receive the first optical signal by using a beam contraction module.

In step 1002, the light receiving device contracts a mode spot of the first optical signal, to obtain a second optical signal. The light receiving device contracts the mode spot of the first optical signal by using the beam contraction module, to obtain the second optical signal. An area of a mode spot of the second optical signal irradiating on an input end surface of the multi-core multi-mode waveguide may be equal to a cross-sectional area of the multi-core multi-mode waveguide.

In step 1003, the light receiving device concentrates energy of the second optical signal in a plurality of regions, to obtain a plurality of third optical signals. The plurality of third optical signals are in one-to-one correspondence with the plurality of regions. By using the multi-core multi-mode waveguide, the light receiving device can concentrate the energy of the second optical signal in the plurality of regions. Each region corresponds to one third optical signal. Therefore, the light receiving device can obtain the plurality of third optical signals based on the second optical signal.

In step 1004, the light receiving device converts the plurality of third optical signals into a plurality of electrical signals. The light receiving device includes a plurality of detectors. The plurality of detectors are configured to receive the plurality of third optical signals, to obtain the plurality of electrical signals based on the plurality of third optical signals.

In step 1005, the light receiving device adds the plurality of third optical signals to obtain a target electrical signal.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1.   A light receiving module, comprising a beam contraction module, a multi-core multi-mode waveguide, and a detector, wherein

the beam contraction module is configured to: receive a first optical signal, and contract a mode spot of the first optical signal, to obtain a second optical signal;
the multi-core multi-mode waveguide comprises a cladding layer and N waveguides, wherein N is an integer greater than 1, and the multi-core multi-mode waveguide is configured to: receive the second optical signal, and concentrate energy of the second optical signal in a plurality of waveguides of the N waveguides, to obtain a plurality of third optical signals; and
the detector is an array formed by N sub-detectors, the N sub-detectors are in one-to-one correspondence with the N waveguides, a plurality of sub-detectors of the N sub-detectors are in one-to-one correspondence with the plurality of third optical signals, and the plurality of sub-detectors are configured to receive the plurality of third optical signals, to obtain a plurality of electrical signals based on the plurality of third optical signals.

2.   The light receiving module according to claim 1, wherein the multi-core multi-mode waveguide is a multi-core multi-mode optical fiber, and the multi-core multi-mode optical fiber meets the following conditions:
$$\frac{2\pi a}{\lambda}\sqrt{n_{core}^2 - n_{clad}^2} > 2.405 ,$$
wherein a is a radius of a fiber core of the multi-core multi-mode optical fiber, $\lambda$ is a wavelength of the second optical signal, $n_{core}$ is a refractive index of the fiber core, and $n_{clad}$ is a refractive index of the cladding layer.

3.   The light receiving module according to claim 2, wherein the multi-core multi-mode optical fiber further meets the following condition:
$$1.15 \leq \frac{n_{core}}{n_{clad}} \leq 1.5 .$$

4.   The light receiving module according to any one of claims 1 to 3, wherein the N waveguides are of $Ge_{x1}Sb_{y1}Se_{z1}$ materials, $0 \leq x_1 \leq 30$, $0 \leq y_1 \leq 45$, $z_1 = 100 - x_1 - y_1$, the cladding layer is of a $Ge_{x2}Sb_{y2}S_{z2}$ material, $0 \leq x_2 \leq 30$, $0 \leq y_2 \leq 40$, $z_2 = 100 - x_2 - y_2$, Ge is a germanium element, Sb is an antimony element, S is a sulfur element, and Se is a selenium element.

5.   The light receiving module according to any one of claims 1 to 3, wherein the N waveguides are of $As_{x3}Se_{y3}$ materials, $35 \leq x_3 \leq 45$, $y_3 = 100 - x_3$, the cladding layer is of a $Ge_{x4}As_{y4}Se_{z4}$ material, $0 \leq x_4 \leq 45$, $0 \leq y_4 \leq 45$, $z_4 = 100 - x_4 - y_4$, Ga is a gallium element, and As is an arsenic element.

**6.** The light receiving module according to any one of claims 1 to 5, wherein a length of the multi-core multi-mode waveguide is between M×1520 micrometers and M×2005 micrometers, and M is an integer greater than 0.

**7.** The light receiving module according to any one of claims 1 to 6, wherein a cross section of the multi-core multi-mode waveguide is a circle, and a diameter of the circle is between 100 micrometers and 300 micrometers.

**8.** The light receiving module according to any one of claims 1 to 7, wherein a distance between centers of any two waveguides of the N waveguides is greater than or equal to 15 micrometers.

**9.** The light receiving module according to claim 1, wherein materials of the N waveguides and the cladding layer are silicon nitride materials.

**10.** The light receiving module according to any one of claims 1 to 9, wherein a ratio of a light spot area S1 of the second optical signal irradiating on the multi-core multi-mode waveguide to a cross-sectional area S2 of the multi-core multi-mode waveguide is less than 1.5.

**11.** A light receiving device, comprising a signal processor and the light receiving module according to any one of claims 1 to 10, wherein

the light receiving module is configured to receive a first optical signal, to obtain a plurality of electrical signals based on the first optical signal; and
the signal processor is configured to add the plurality of electrical signals to obtain a target electrical signal.

**12.** An optical communication system, comprising a light transmitting device and the light receiving device according to claim 11, wherein

the light transmitting device is configured to transmit a first optical signal to the light receiving device; and
the light receiving device is configured to: receive the first optical signal, to obtain a plurality of third optical signals based on the first optical signal, and convert the plurality of third optical signals into a plurality of electrical signals.

**13.** A light receiving method, comprising:

receiving a first optical signal;
contracting a mode spot of the first optical signal, to obtain a second optical signal;

concentrating energy of the second optical signal in a plurality of regions, to obtain a plurality of third optical signals;
converting the plurality of third optical signals into a plurality of electrical signals; and
adding the plurality of electrical signals, to obtain a target electrical signal.

100

101

102

103

1021
1022

Light receiving
module

FIG. 1

200

201

202

203

X

2021
2022

Light receiving
module

FIG. 2

202

301    302

FIG. 3

400

401

Signal processor

402

Light receiving module

Light receiving device

FIG. 4

500

501

Light transmitting device

502

Light receiving device

First optical signal

FIG. 5

FIG. 6

FIG. 7

FIG. 8

FIG. 9

FIG. 10

## INTERNATIONAL SEARCH REPORT

| | International application No. |
|---|---|
| | **PCT/CN2022/136463** |

### A. CLASSIFICATION OF SUBJECT MATTER

H04B10/2581(2013.01)i; H04B10/60(2013.01)i;H04B10/11(2013.01)i;G02B 6/42(2006.01)i

According to International Patent Classification (IPC) or to both national classification and IPC

### B. FIELDS SEARCHED

Minimum documentation searched (classification system followed by classification symbols)

H04B,G02B

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, WPABS, WPABSC, CNKI: 自由空间光通信, 接收, 缩束, 透镜, 探测, 多芯, 多模, 单模, 波导, 光纤, 包层, 折射率, FSOC, receiv+, constrict+, shrink+, lens+, multi, core?, mode?, waveguide?, single, fiber?, fibre?, cladding?, refractive, index, Gex1Sby1Sez1, MCF, MMF, detect+

### C. DOCUMENTS CONSIDERED TO BE RELEVANT

| Category* | Citation of document, with indication, where appropriate, of the relevant passages | Relevant to claim No. |
|---|---|---|
| X | CN 109600171 A (SHANGHAI INSTITUTE OF OPTICS AND FINE MECHANICS, CHINESE ACADEMY OF SCIENCES) 09 April 2019 (2019-04-09) description, paragraphs 0022-0035, and figures 1-5 | 1, 6-13 |
| Y | CN 109600171 A (SHANGHAI INSTITUTE OF OPTICS AND FINE MECHANICS, CHINESE ACADEMY OF SCIENCES) 09 April 2019 (2019-04-09) description, paragraphs 0022-0035, and figures 1-5 | 2-5 |
| Y | CN 110673264 A (NANKAI UNIVERSITY) 10 January 2020 (2020-01-10) description, paragraphs 0010-0012 | 2 |
| Y | CN 107450124 A (TIANJIN UNIVERSITY) 08 December 2017 (2017-12-08) description, paragraphs 0030 and 0036-0053 | 3-5 |
| Y | CN 107390315 A (HUAZHONG UNIVERSITY OF SCIENCE AND TECHNOLOGY) 24 November 2017 (2017-11-24) description, paragraphs 0092 | 2 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 February 2023** | **23 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
| --- |
| **PCT/CN2022/136463** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 205333906 U (INFORMATION AND COMMUNICATION BRANCH OF STATE GRID JIANGXI ELECTRIC POWER CO. et al.) 22 June 2016 (2016-06-22) description, paragraph 0092 | 2 |
| A | CN 113296258 A (XI'AN INSTITUTE OF OPTICS AND PRECISION MECHANICS, CHINESE ACADEMY OF SCIENCES) 24 August 2021 (2021-08-24) entire document | 1-13 |
| A | CN 108964765 A (LYU JINGFEI) 07 December 2018 (2018-12-07) entire document | 1-13 |
| A | US 2021320726 A1 (KALMAN, R. et al.) 14 October 2021 (2021-10-14) entire document | 1-13 |
| A | CN 112514287 A (INSTITUT MINES-TELECOM) 16 March 2021 (2021-03-16) entire document | 1-13 |
| A | CN 106461868 A (NATIONAL INSTITUTE OF INFORMATION AND COMMUNICATIONS TECHNOLOGY et al.) 22 February 2017 (2017-02-22) entire document | 1-13 |
| A | JP 2013257521 A (NATIONAL INSTITUTE OF INFORMATION AND COMMUNICATIONS TECHNOLOGY) 26 December 2013 (2013-12-26) entire document | 1-13 |

Form PCT/ISA/210 (second sheet) (July 2022)

## INTERNATIONAL SEARCH REPORT
### Information on patent family members

International application No.

**PCT/CN2022/136463**

| Patent document cited in search report | | | Publication date (day/month/year) | Patent family member(s) | | | Publication date (day/month/year) |
|---|---|---|---|---|---|---|---|
| CN | 109600171 | A | 09 April 2019 | None | | | |
| CN | 110673264 | A | 10 January 2020 | None | | | |
| CN | 107450124 | A | 08 December 2017 | None | | | |
| CN | 107390315 | A | 24 November 2017 | None | | | |
| CN | 205333906 | U | 22 June 2016 | None | | | |
| CN | 113296258 | A | 24 August 2021 | None | | | |
| CN | 108964765 | A | 07 December 2018 | None | | | |
| US | 2021320726 | A1 | 14 October 2021 | None | | | |
| CN | 112514287 | A | 16 March 2021 | WO | 2019206634 | A1 | 31 October 2019 |
| | | | | EP | 3562064 | A1 | 30 October 2019 |
| | | | | KR | 20210019991 | A | 23 February 2021 |
| | | | | JP | 2021522724 | A | 30 August 2021 |
| | | | | US | 2021250094 | A1 | 12 August 2021 |
| | | | | US | 11539438 | B2 | 27 December 2022 |
| CN | 106461868 | A | 22 February 2017 | US | 2017045687 | A1 | 16 February 2017 |
| | | | | JP | 2015210339 | A | 24 November 2015 |
| | | | | JP | 5957718 | B2 | 27 July 2016 |
| | | | | DK | 3136145 | T3 | 06 September 2021 |
| | | | | WO | 2015163124 | A1 | 29 October 2015 |
| | | | | EP | 3136145 | A1 | 01 March 2017 |
| | | | | EP | 3136145 | A4 | 20 December 2017 |
| | | | | EP | 3136145 | B1 | 14 July 2021 |
| | | | | CN | 106461868 | B | 19 July 2019 |
| JP | 2013257521 | A | 26 December 2013 | JP | 5904542 | B2 | 13 April 2016 |

Form PCT/ISA/210 (patent family annex) (July 2022)

**EP 4 429 130 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210033151

**17**